(19) **Europäisches Patentamt / European Patent Office / Office européen des brevets**

(11) **EP 1 573 933 B1**

(12) **FASCICULE DE BREVET EUROPEEN**

(45) Date de publication et mention de la délivrance du brevet:
**22.10.2008 Bulletin 2008/43**

(21) Numéro de dépôt: **03815405.0**

(22) Date de dépôt: **15.12.2003**

(51) Int Cl.:
***H04B 1/69*** (2006.01)

(86) Numéro de dépôt international:
**PCT/FR2003/003724**

(87) Numéro de publication internationale:
**WO 2004/066517 (05.08.2004 Gazette 2004/32)**

(54) **PROCEDE ET SYSTEME DE RECEPTION D'UN SIGNAL ULTRA-LARGE BANDE A NOMBRE DE TRAJETS DE PROPAGATION AUTO-ADAPTATIF**

Verfahren und system zum empfangen eines Ultrabreitbandsignals mit selbstanpassender Anzahl von Ausbreitungswegen

Method and system for receiving an ultra-wideband signal with a self-adapting number of propagation paths

(84) Etats contractants désignés:
**AT BE BG CH CY CZ DE DK EE ES FI FR GB GR HU IE IT LI LU MC NL PT RO SE SI SK TR**

(30) Priorité: **17.12.2002 FR 0216027**

(43) Date de publication de la demande:
**14.09.2005 Bulletin 2005/37**

(73) Titulaire: **FRANCE TELECOM**
**75015 Paris (FR)**

(72) Inventeurs:
• **MISCOPEIN, Benoît**
**F-38000 Grenoble (FR)**
• **SCHWOERER, Jean**
**F-38000 Grenoble (FR)**

• **BATUT, Eric**
**F-38220 Vizille (FR)**

(74) Mandataire: **Loisel, Bertrand et al**
**Cabinet Plasseraud**
**52 rue de la Victoire**
**75440 Paris Cedex 09 (FR)**

(56) Documents cités:
**WO-A-01/76086**

• **TERO OJANPERÄ, RAMJEE PRASAD: "Wideband CDMA For Third Generation Mobile Communications" , ARTECH HOUSE , USA XP002260449 page 46 -page 47**

## Description

L'invention concerne un procédé et un système de réception d'un signal ultra-large bande, à nombre de trajets de propagation auto-adaptatif.

La technique des communications radio en signal ultra-large bande, encore désigné UWB en langage anglo-saxon, n'utilise pas de fréquence porteuse. Au lieu de moduler un signal ou onde porteuse support, l'information à transmettre est émise directement en bande de base, en utilisant des impulsions support de très courte durée, moins d'une nanoseconde, et donc d'une très grande largeur de bande, plusieurs GHz.

Ces impulsions étant émises à faible puissance, la densité spectrale de puissance du signal émis est, en conséquence très faible.

Ainsi, un signal UWB n'est pas un signal continu mais, au contraire, un train d'impulsions très brèves et de très faible rapport cyclique.

L'accès multiple à la transmission par un tel signal est réalisé, habituellement, en faisant des sauts temporels (Time Hopping) régis par une séquence pseudo aléatoire. Le signal peut être modulé en amplitude, par le facteur de forme ou même le retard des impulsions successives.

En rupture avec les concepts des techniques de base utilisant une onde porteuse, les techniques d'émission et de réception de signaux UWB sont des techniques sui generis, se rapprochant des techniques de détection des signaux à étalement de spectre.

En particulier, les récepteurs de signaux UWB "en râteau" sont conçus pour fonctionner dans des environnements perturbés, où la topologie du lieu d'utilisation crée des canaux de transmission complexes, variables ou lentement variables, en raison de nombreux trajets de propagation secondaires multiples, et interdit, en pratique, l'existence d'un trajet de propagation en vision directe.

Ainsi, dans ce but, les récepteurs de signaux UWB connus de l'état de la technique présentent habituellement une structure dite "en râteau" inspirée de celles utilisées pour les récepteurs de signaux à étalement de spectre.

Un tel récepteur est décrit dans le document WO01/76086.

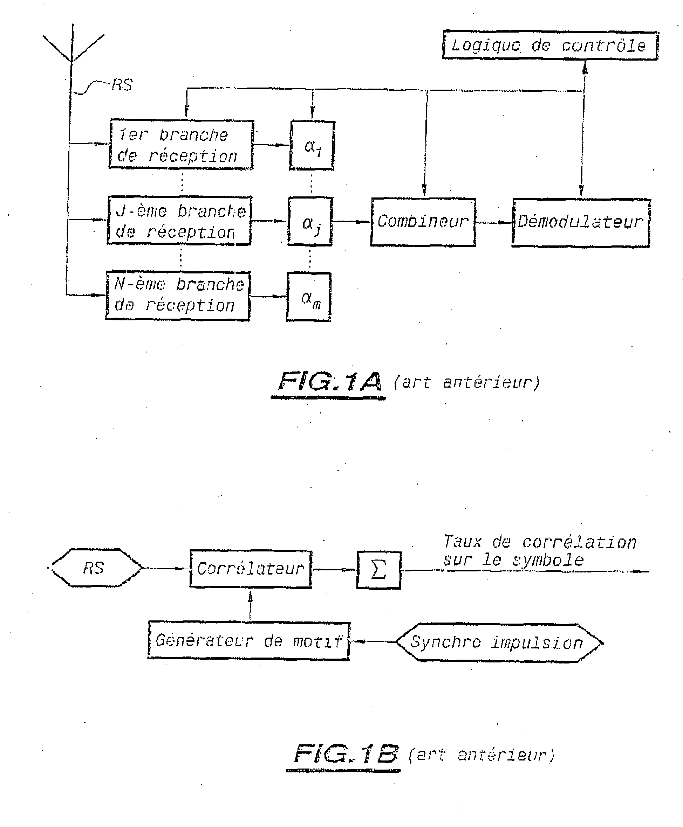

Ainsi que représenté en figure 1A, les récepteurs UWB précités comprennent une branche de réception par "doigt" de râteau, chaque branche de réception traitant en fait un trajet de réception déterminé. La sortie de chacune des branches de réception est recombinée, après pondération, ($\alpha_1$, ... $\alpha_j$, $\alpha_N$, suivant la stratégie retenue par le concepteur du récepteur.

Pour assurer le bon fonctionnement du récepteur, il est nécessaire d'affecter l'une des branches de réception à la recherche de nouveaux trajets de propagation d'impulsions secondaires et/ou principale. Pour un récepteur UWB en râteau à N "doigts" ou trajets, il est donc nécessaire de prévoir N+1 branches de réception.

Ainsi que représenté en outre en figure 1B, dans le cas d'un récepteur UWB en râteau, une branche de réception est constituée par un corrélateur analogique, un générateur de motif de corrélation et un intégrateur analogique. La poursuite du trajet relatif à la branche de réception considérée est assurée par la logique de contrôle du récepteur.

Lorsque le récepteur UWB en râteau est synchronisé, la logique de contrôle du récepteur déclenche la génération de motif correspondant aux instants d'arrivée d'une impulsion. Ce dernier engendre un motif de corrélation conçu pour présenter une forte valeur d'intercorrélation avec l'impulsion reçue et une valeur d'intercorrélation nulle en présence de bruit blanc. Une valeur d'intercorrélation intermédiaire importante indique la présence d'une impulsion directe ou secondaire.

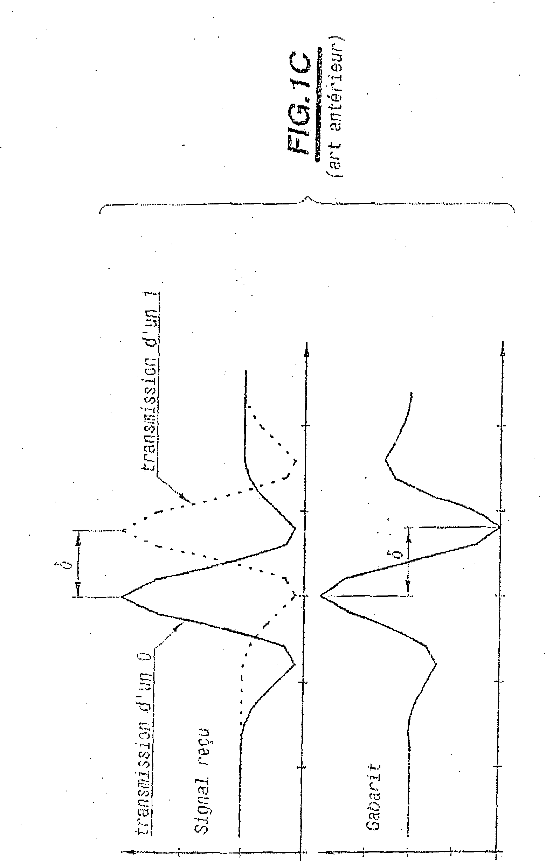

La figure 1C représente, à titre illustratif, un exemple de ce principe dans le cas d'une modulation numérique 2-PPM, la transmission de valeurs binaires 0 et 1 étant représentée par la transmission de deux impulsions A et B décalées temporellement.

Le motif de corrélation est conçu pour que la valeur du coefficient d'intercorrélation soit positif en présence d'une impulsion non décalée (A), correspondant à la transmission d'une valeur zéro mais négative en présence d'une impulsion décalée (B), correspondant à la transmission d'une valeur un, et nul en l'absence d'impulsions. Le motif de corrélation est ainsi symétrique par rapport à un centre de asymétrie.

Toutefois, un symbole étant le plus souvent codé sur plusieurs impulsions, il est nécessaire d'intégrer les valeurs du coefficient d'intercorrélation obtenues pour chaque impulsion relative à un même symbole et ainsi obtenir une valeur de coefficient de corrélation globale du symbole. Cette valeur est transmise à la logique de contrôle du récepteur pour y être interprétée en fonction de la méthode de codage utilisée et retrouver ainsi le symbole transmis.

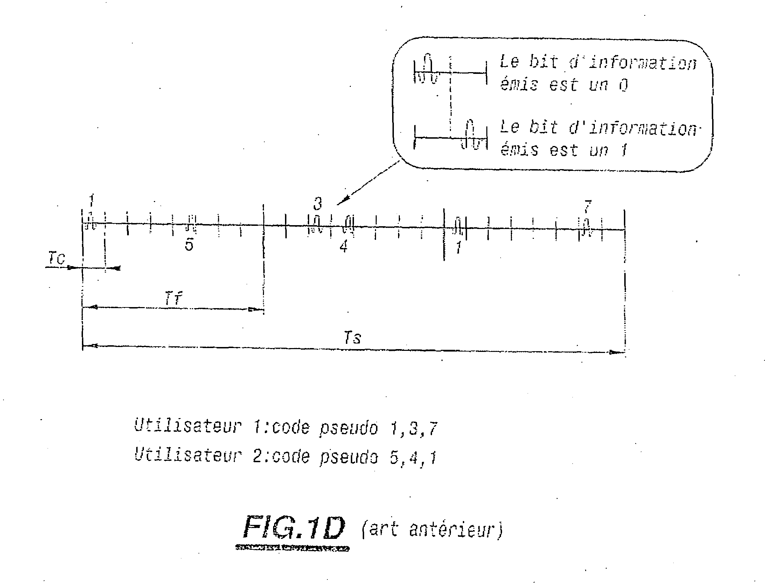

Un autre exemple concret illustré dans le cas d'une modulation PPM avec deux utilisateurs simultanés disposant chacun d'une séquence pseudo aleatoire est représenté en figure 1D. Dans cet exemple, le symbole est répété trois fois, chaque utilisateur émettant donc trois impulsions, représentatives du même symbole. En conséquence, le temps symbole $T_s$ est divisé en trois trames Tf dans laquelle chaque utilisateur code une seule impulsion unique.

L'emplacement de cette impulsion dans la trame $T_f$ est fixé par rapport à des intervalles élémentaires de trame par la valeur de la séquence pseudo aléatoire propre à chaque utilisateur. Enfin, chaque impulsion est décalée d'un intervalle de temps $\delta$ par rapport au début de chaque intervalle élémentaire de trame lorsque la transmission binaire représentée est celle de la valeur 1 au lieu de la valeur 0, en l'absence de décalage.

Les récepteurs UWB en râteau précités impliquent un surcoût important en complexité, car chaque doigt supplémentaire suppose l'intégration d'une branche de réception supplémentaire. En conséquence, il existe une limite assez draconienne au nombre de doigts que peut présenter un récepteur de ce type, eu égard aux contraintes d'intégration, d'encombrement, de coût et de consommation.

En pratique, il est rare de pouvoir disposer d'un récepteur UWB en râteau présentant plus de quatre doigts, soit cinq branches de réception effectives.

De tels récepteurs s'avèrent donc cantonnés à des applications haut de gamme, pour lesquels le critère de coût est secondaire vis-à-vis de celui des performances globales de qualité de la liaison.

Des solutions de récepteur UWB "en râteau" tout numérique ont été envisagées, dans lesquelles le signal reçu est directement numérisé en sortie d'antenne. Bien que, en raison du traitement purement logiciel du signal numérisé précité, la structure de tels récepteurs ne soit plus en rapport avec l'architecture en râteau traditionnelle, de telles solutions ne sont pas viables actuellement car les convertisseurs analogiques-numériques actuels ne sont pas adaptés à une telle utilisation, et les traitements numériques à effectuer sur les signaux numériques précités ne peuvent être exécutés en temps réel par les processeurs de signaux numériques actuels.

La présente invention a pour but de remédier à l'ensemble des inconvénients de la technique antérieure de mise en oeuvre des récepteurs d'un signal UWB en râteau:

En particulier, un objet de la présente invention est la mise en oeuvre d'un procédé et d'un système de réception d'un signal ultra-large bande UWB dont l'architecture matérielle est notablement simplifiée vis-à-vis de celle des récepteurs UWB en râteau de l'art antérieur.

Un autre objet de la présente invention est la mise en oeuvre d'un procédé et d'un système de réception d'un signal UWB grâce auxquels les coûts de mise en oeuvre sont sensiblement réduits, en raison de la simplification précitée.

Un autre objet de la présente invention est la mise en oeuvre d'un procédé et d'un système de réception d'un signal ultra-large bande grâce auquel, malgré la simplification significative de la structure mise en oeuvre, une amélioration de la qualité de liaison et des performances globales est obtenue de manière significative en raison de l'absence de limitation matérielle du nombre de trajets de propagation principal et secondaires effectivement traités.

Un autre objet de la présente invention est, enfin, en raison de l'absence de limitation matérielle du nombre de trajets principal et secondaires effectivement précités, la mise en oeuvre d'un procédé et d'un système de réception d'un signal ultra-large bande à nombre de trajets de propagation effectivement traité auto-adaptatif, ce qui permet d'optimiser la qualité de la liaison radio entre émetteur et récepteur, même en présence d'un canal de transmission issu d'un environnement sévère variable.

Le procédé et le système de réception UWB, objets de la présente invention, trouvent application à la liaison radio d'appareils domestiques ou professionnels de tout type, en particulier en environnement correspondant à un canal de transmission par voie hertzienne sensiblement perturbé ou variable.

Ils seront mieux compris à la lecture de la description et à l'observation des figures ci-après dans lesquelles, outre les figures 1A à 1D relatives à l'art antérieur :

- la figure 2 représente, à titre illustratif, un organigramme des étapes essentielles permettant la mise en oeuvre du procédé objet de la présente invention ;
- les figures 3A, 3C et 3D représentent, à titre de pur exemple illustratif, des chronogrammes de détection de symboles transmis selon des trajets multiples, à partir d un motif de corrélation composite, conformément au procédé objet de la présente invention, dans le cas où la transmission est effectuée à titre d'exemple non limitatif en mode 2-PPM, les impulsions directes et secondaires, se propageant selon un trajet direct respectivement secondaire, étant prises en compte :

- la figure 4A représente, à titre d'exemple purement illustratif, le schéma fonctionnel sous forme de schémas blocs, d'un système de réception d'un signal UWB à nombre de trajets de propagation auto-adaptatif, conforme à l'objet de la présente invention :

- la figure 4B représente, à titre illustratif, un organigramme de mise en oeuvre du fonctionnement du système objet de l'invention, tel que représenté en figure 4A.

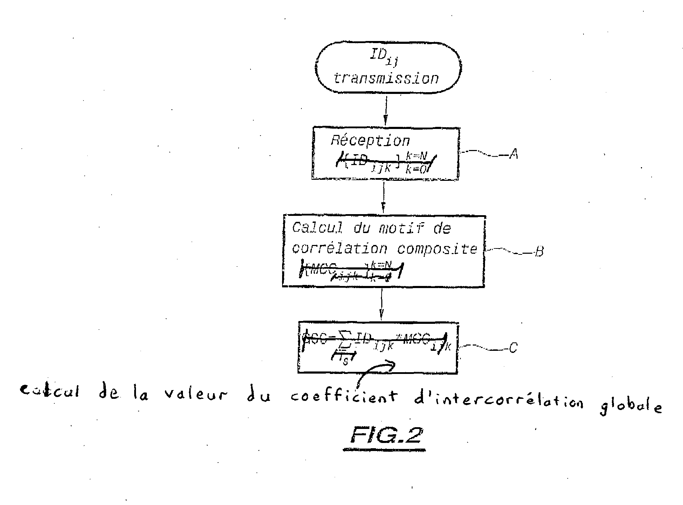

Une description plus détaillée du procédé et du système de réception d'un signal ultra-large bande, conforme à l'objet de la présente invention, sera maintenant donnée en liaison avec la figure 2 et les figures suivantes.

D'une manière générale, on rappelle que le processus de transmission du signal ultra-large bande correspond à celui décrit précédemment en liaison avec les figures 1A à 1D, le procédé de réception objet de l'invention permettant, dans ces conditions, de recevoir sur un temps symbole $T_s$, une suite d impulsions directes successives modulées, chaque impulsion se propageant selon un trajet de propagation directe à laquelle est associée une pluralité d'impulsions secondaires successives distinctes, se propageant chacune suivant un trajet de propagation secondaire distinct du trajet de propagation directe.

On comprend, en particulier, dans ces conditions, que chaque impulsion directe correspond à un temps de propagation le plus court, chaque impulsion secondaire successive distincte, associée à l'impulsion directe précitée, étant alors décalée successivement dans le temps par rapport à l'instant de réception, de l'impulsion directe à laquelle ces dernières sont associées.

Les trajets de propagation directe et secondaire ne préjugent aucunement du nombre de réflexions de l'impulsion correspondante se propageant sur ces trajets Toutefois, les impulsions secondaires successives distinctes sont engendrées par un nombre sensiblement croissant de réflexions, chaque réflexion étant le siège d'une atténuation, et les impulsions secondaires successives distinctes sont considérées présenter une amplitude ou une énergie sensiblement décroissant en fonction de leur rang de réception.

En conséquence, on considère la transmission d'impulsions $ID_{ij}$, ces impulsions correspondant, par exemple, aux impulsions émises, telles que représentées en figure 1D, lorsque la modulation est de type 2-PPM par exemple. Dans la notation précédente, l'indice i désigne l'utilisateur 1 ou 2, dans le cas de la figure 1D, et l'indice j désigne le rang de l'impulsion émise dans chaque trame $T_f$ selon le code pseudo-aléatoire affecté à chaque utilisateur.

A titre d'exempte non limitatif et de simplification de la description, on considère le code pseudo-aléatoire affecté à chacun des utilisateurs i=1. i=2 de la figure 1-D, correspondant successivement aux trames constitutives du temps symbole, le code pseudo-aléatoire pour chaque utilisateur précité étant respectivement j=1, 3, 7 pour l'utilisateur 1, puis j=5, 4, 1 pour l'utilisateur 2.

Le décalage temporel $\delta$ est le même que dans le cas de la figure 1 D pour simplification.

En référence à la figure 2, le procédé objet de l'invention consiste alors à recevoir, en une étape A, la suite d'impulsions directes successives modulées et la pluralité d'impulsions secondaires associées à chacune des impulsions directes successives modulées sur un même circuit de réception.

Dans ces conditions, la suite d'impulsions directes et d'impulsions secondaires associées est notée :

$$\sim \{ID_{ijk}\}_{k=0}^{k=N}$$

Dans cette notation, i et j représentent la référence utilisateur, respectivement la référence de trame dans le temps symbole $T_s$ et k représente le rang de l'impulsion reçue, impulsion directe et/ou impulsion secondaire.

Par convention, on indique que le rang de l'impulsion directe, dans chaque trame $T_f$, est arbitrairement pris égal à 0, soit k=0, les impulsions secondaires distinctes successives présentant un rang k=1 à N par exemple.

L'étape A de réception est alors suivie d'une étape B consistant à engendrer, par calcul, un motif de corrélation composite constitué par une suite de motifs de corrélation élémentaires.

D'une manière générale, on indique que chaque motif de corrélation élémentaire correspond, dans l'exemple non limitatif de la modulation 2-PPM, au signal dit de gabarit représenté en figure 1C.

D'une manière plus spécifique, on indique que la suite de motifs de corrélation élémentaires comprend un premier motif de corrélation élémentaire associé à chaque impulsion directe, c'est-à-dire à toute impulsion correspondait en position dans chaque trame $T_f$ à la position donnée par le code pseudo-aléatoire affecté à chaque utilisateur et, bien entendu, des motifs de corrélation élémentaires successifs associés chacun à une impulsion secondaire successive de rang k, $k \in [1,N]$.

Bien entendu, les motifs de corrélation élémentaires successifs, associées à chaque impulsion secondaire, sont décalés en temps par rapport au premier motif de corrélation élémentaires associé à l'impulsion directe d'une valeur correspondant à la différence de temps de propagation entre, d'une part, le temps de propagation de l'impulsion directe, de rang k=0, sur le trajet de propagation directe, et, d'autre part, le temps de propagation de l'impulsion secondaire associée, de ring successive $k \in [1,N]$ sur le trajet de propagation secondaire correspondant.

Pour engendrer le motif de corrélation composite précité, l'on procède à titre d'exemple non limitatif, à la détection par corrélation glissante de l'ensemble des impulsions directes respectivement secondaires reçues sur un temps symbole. On indique, en effet, que le calcul ainsi effectué sur un temps symbole peut alors être utilisé pour le temps symbole suivant, en raison du fait que, sur un temps symbole, le cas échéant sur deux temps symboles consécutifs, le canal de transmission est considéré comme sensiblement invariable. Le processus de mise en oeuvre et de calcul du motif de corrélation composite sera décrit de manière plus détaillée dans la description.

L'étape B est alors suivie d'une étape C consistant à calculer la valeur du coefficient d'intercorrélation globale

GCC désigne la valeur du coefficient d'intercorrélation globale obtenu

On indique que la valeur du coefficient d'intercorrélation globale GCC est ainsi constitué par la somme des coefficients d'intercorrélation de chacune des impulsions directes et secondaires obtenues pour chacune des impulsions modulées émises pour le même symbole et représente une valeurs de corrélation globale du symbole transmis pour chaque utilisateur.

L'opération de calcul du coefficient d'intercorrélation globale comprend, ainsi, en référence à l'étape C de la figure 2, le calcul du coefficient d'intercorrélation élémentaire entre chaque motif d'intercorrélation élémentaire et l'impulsion directe respectivement l'impulsion secondaire associée à chacun des motifs d'intercorrélation élémentaires, puis l'intégration, sur le temps symbole $T_s$, de l'ensemble des valeurs de coefficient d'intercorrélation élémentaire.

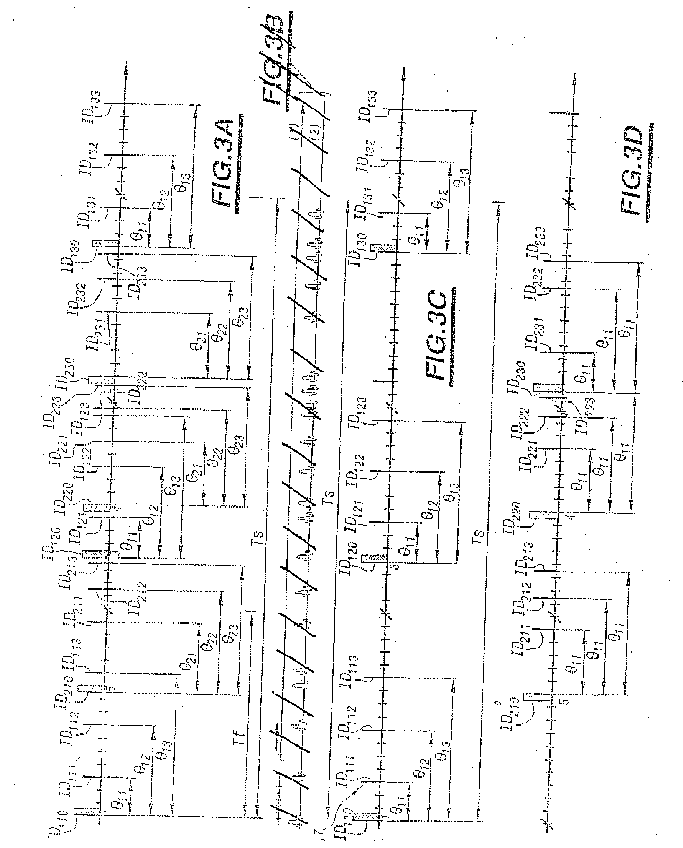

Une illustration de la mise en oeuvre des étapes A, B et C représentées en figure 2 sera maintenant donnée à l'aide des chronogrammes d'impulsions représentés en figures 3A, 3C et 3D.

Sur la figure 3A on a représenté la suite d'impulsions directes successives modulées et d'impulsions secondaires associées à chacune des impulsions directes dans le cas-non limitatif de la figure 1D.

Les impulsions directes de rang k=0 engendrées pour les utilisateurs 1 et 2 sont représentées différemment par hachures et points, les impulsions secondaires de rang k>1 étant limitées à k=3 afin de ne pas surcharger le dessin.

On comprend, en particulier, que la position des impulsions secondaires, telle que $ID_{111}$ à $ID_{113}$ peut être quelconque par rapport à toute impulsion directe k=0 ultérieur.

Dans ces conditions, le décalage temporel $\theta_{11}$, $\theta_{12}$, $\theta_{13}$, respectivement $\theta_{21}$, $\theta_{22}$, $\theta_{23}$ de chaque impulsion secondaire associée à l'impulsion directe correspondante se répète sur chaque intervalle trame successif $T_f$ sans changement en référence à la convention précédemment mentionnée.

Ainsi, le motif de corrélation composite, peut alors être engendré de la manière ci-après :

- verrouillage de chaque motif de corrélation élémentaire sur chaque impulsion directe de rang k=0 ;
- calcul du coefficient d'intercorrélation de motifs de corrélation élémentaires successifs engendrés par exemple à des intervalles de temps correspondant à la résolution temporelle d'un gabarit constitutif de chaque motif de corrélation élémentaire, tel que représenté en figure 1C ;
- sélection des seuls motifs de corrélation élémentaires successifs dont le produit d'intercorrélation est supérieur à une valeur de seuil, par exemple, pour constituer le motif de corrélation composite.

On comprend, dans ces conditions, que le motif de corrélation composite précité est constitué sensiblement par des motifs de corrélation élémentaires engendrés à l'instant d'apparition non seulement des impulsions directes de rang k=0, mais des impulsions secondaires de rang k>1 pour lesquelles le coefficient d'intercorrélation, avec un motif de corrélation élémentaire, est supérieur à la valeur de seuil précitée.

Le processus de calcul de la valeur de coefficient d'intercorrélation globale GCC est alors effectué, ainsi que représenté en figures 3C, puis 3D, pour chacun des utilisateurs et, bien entendu, pour les impulsions directes et les impulsions secondaires associées à ces dernières à partir du motif de corrélation composite, et de la succession des impulsions précitées.

D'une manière générale, on indique que, alors que la synchronisation du motif de corrélation composite est effectuée sensiblement sur un temps symbole, à partir des impulsions directes et, bien entendu, des codes pseudo-aléatoires attribués à chacun des utilisateurs, la discrimination du rang des impulsions secondaires n'est pas indispensable, seule la position de ces impulsions dans un temps symbole $T_s$ étant prise finalement en considération.

Le procédé objet de la présente invention apparaît, ainsi, particulièrement remarquable en ce que le nombre d'impulsions finalement retenues pour assurer l'opération de calcul du motif de corrélation composite, puis de la valeur du coefficient d'intercorrélation globale, peut être élevé et facilement choisi, par exemple, à un nombre de 10 impulsions secondaires pour chaque impulsion directe en fonction des caractéristiques d'utilisation et de mise en oeuvre du procédé objet de l'invention,

En particulier, le choix du nombre des impulsions retenues peut être guidé par des considérations relatives soit au niveau d'amplitude et/ou d'énergie des impulsions secondaires ou, de manière plus simple, au nombre éffectif d'impulsions retenues.

Ainsi, pour un ensemble dénombrable d'impulsions directes et secondaires, compte tenu de la discrimination temporelle de deux impulsions successives, le procédé objet de l'invention peut consister à retenir les N premiers trajets, les N premiers trajets précités comportant le trajet direct de rang k=0, correspondant à un temps de propagation de l'impulsion modulée associée le plus faible, et N-1 trajets secondaires correspondant chacun à un temps de propagation d'une impulsion secondaire successivement croissante.

Dans cette solution on indique que le nombre d'impulsions secondaires retenues peut consister à discriminer toute impulsion directe d'une même trame et à retenir les impulsions secondaires comprises entre deux impulsions directes successives ou même trois impulsions directes successives. Le nombre d'impulsions secondaires ainsi retenues permet de définir et de retenir les N premiers trajets.

Une autre possibilité pour le choix du nombre d'impulsions secondaires peut consister, pour l'ensemble dénombrable d'impulsions directes et d'impulsions secondaires considérées, à retenir N trajets pour lesquels l'amplitude ou l'énergie de l'impulsion directe respectivement des impulsions secondaires est maximale.

Un tel mode opératoire consiste, bien entendu, outre la discrimination des amplitudes ou énergie des impulsions directes de rang k=0 considérées comme maximale, une discrimination des impulsions secondaires se on leur amplitude et/ou leur énergie de façon à retenir les N impulsions d'amplitude et/ou d'énergie la meilleure.

On comprend, toutefois, que la discrimination par le seul nombre N d'impulsions secondaires associées à une impulsion directe est susceptible de se révéler moins performante, du point de vue de la mise en oeuvre du procédé objet de l'invention, que la discrimination par un critère d'amplitude et/ou d'énergie des impulsions précitées.

En tout état de cause, le nombre N de trajets retenus peut être adapté soit selon un critère de sélection des N premiers trajets pour exécution d'un traitement plus rapide soit, au contraire, selon un critère de sélection de N trajets correspondant à une amplitude et/ou une énergie maximale de l'impulsion directe et des impulsions secondaires en fonction des conditions de propagation. Un tel mode opératoire permet ainsi d'optimiser la qualité de la liaison par signal ultra-large bande.

En ce qui concerne l'opération de calcul du motif de corrélation composite on indique que ce processus consiste, en fait, à établir par corrélation sur au moins un temps symbole $T_s$, une image du canal de transmission en termes d'impulsions directes et d'impulsions secondaires de temps de propagation et de différence de temps de propagation entre impulsions directes et impulsions secondaires successives, puis à mettre à jour, par corrélation glissante, l'image du canal de transmission pour actualiser l'apparition et la disparition de trajets de propagation secondaires, le cas échéant de trajets de propagation directs, et établir, sur au moins un temps symboles, le motif de corrélation composite comme image actualisée du canal de transmission.

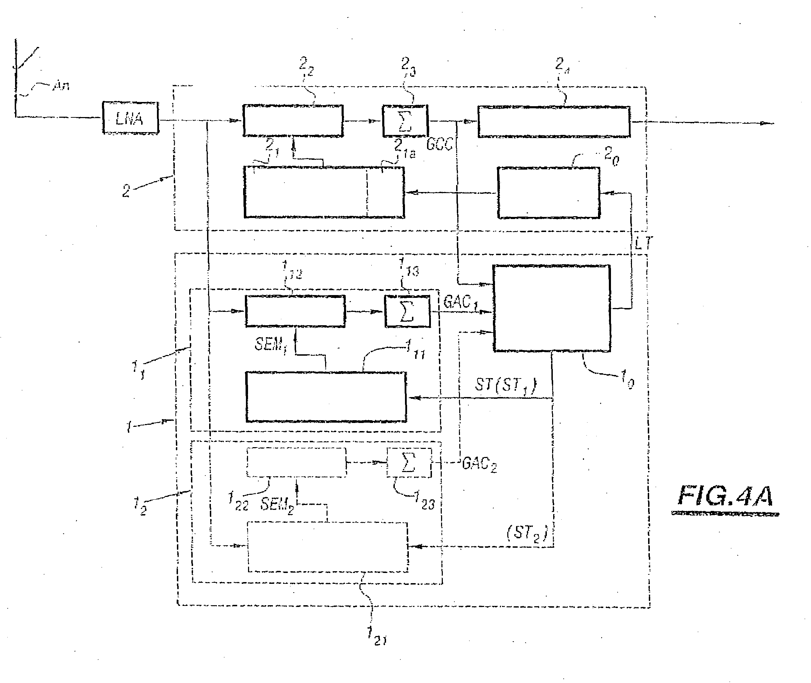

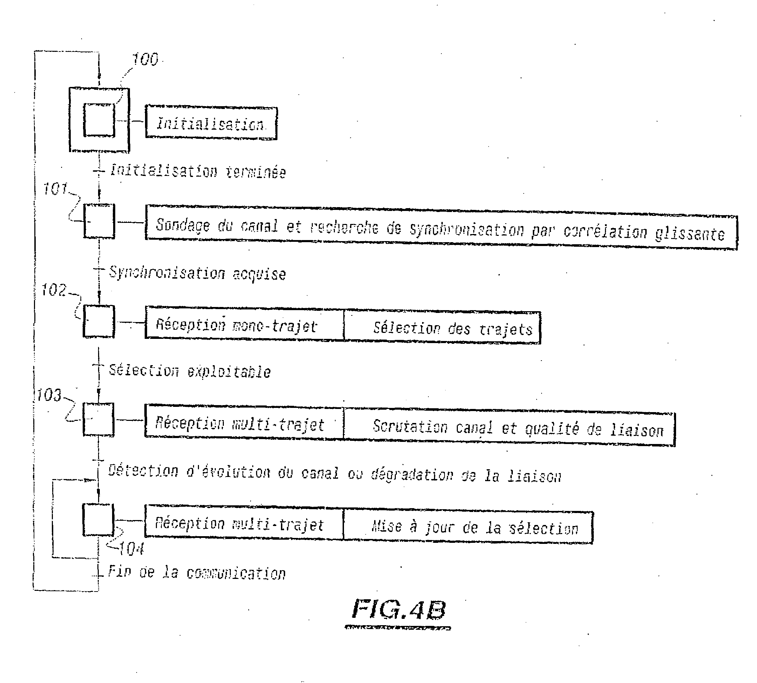

Une description plus détaillée d'un système de réception d'un signal ult-a-large bande représentatif de symboles objet de la présente invention sera maintenant donnée en liaison avec les figures 4A et 4B.

Ainsi que représentée sur la figure 4A précitée, le système objet de l'invention comprend des circuits de réception communs de la suite d'impulsions successives modulées, imposions directes de rang k=0 et impulsions secondaires de rang k>0.

A titre d'exemple non limitatif, les circuits de réception communs comportent une antenne An et un amplificateur à faible bruit LNA constituant amplificateur d'antenne:

Ils comportent, en outre, une voie 1 d'acquisition et d'actualisation sur au moins un temps symbole $T_s$ d'une image du canal de transmission en termes d'impulsions directes et d'impulsions secondaires, de temps de propagation et de différence de temps de propagation entre impulsions directes et impulsions secondaires successives.

Ainsi que mentionné précédemment relativement au procédé objet de l'invention, la voie d'acquisition et d'actualisation 1 permet, par corrélation glissante, d'assurer une actualisation de l'apparition et de la disparition de trajets de propagation secondaires, ainsi que du trajet de propagation principal et bien entendu, d'établir sur au moins un temps symbole le motif de corrélation composite précédemment mentionné dans la description.

Ainsi que représenté sur la figure 4A, la voie 1 d'acquisition et d' actualisation permet de délivrer un signal de liste de trajets représentatif de l'image du canal de transmission, la liste de trajets étant notée LT sur la figure 4, cette liste étant délivrée par exemple pour chaque temps symbole $T_s$.

A titre d'exemple non limitatif, on indique que le signal de liste de trajets peut correspondre à la désignation des instants, sur le temps symbole, auxquels chaque motif de corrélation élémentaire doit être engendré successivement pour réaliser le motif de corrélation composite précédemment cité.

De même que le motif de corrélation composite, on indique que les instants désignés par le signal de liste de trajets LT sont, bien entendu, décalés en temps par rapport à l'instant du premier motif de corrélation élémentaire associé à chaque impulsion directe de la différence de temps de propagation entre le temps de propagation de l'impulsion directe sur le trajet de propagation directe et le temps de propagation de l'impulsion secondaire associée se propageant sur le trajet de propagation secondaire correspondant.

En outre, le système objet de la présente invention comporte une voie 2 de corrélation unique recevant le signal de liste de trajets de propagation directs et secondaires LT, la voie de corrélation unique 2 permettant de calculer la valeur du coefficient d'intercorrélation global GCC

Une description plus détaillée de la voie d'acquisition et d'actualisation 1 sera maintenant donnée ci-après en référence à la même figure 4A.

Selon un premier mode de réalisation, la voie d'acquisition et d'actualisation 1 précitée comporte une voie de corrélation globale d'acquisition et ce poursuite, notée $1_1$ recevant la suite des impulsions successives délivrées par les Circuits de réception communs et délivrant une valeur de coefficient de corrélation globale d'acquisition, notée $GAC_1$.

D'une manière plus spécifique, on indique que, de manière semblable aux dispositifs de l'art antérieur, tel que représenté en figure 1B, la voie de corrélation globale d'acquisition $1_1$ comprend un corrélateur $1_{12}$, un intégrateur ou sommateur $1_{13}$ et un générateur $1_{11}$ de motif élémentaire de synchronisation $SEM_1$.

La voie d'acquisition et d'actualisation 1 comporte, en outre, un module $1_0$ d'exploration et de poursuite de canal, lequel reçoit la valeur de coefficient de corrélation globale d'acquisition $GAC_1$ délivré par la voie de corrélation globale d'acquisition et de poursuite $1_1$ précédemment citée, ainsi que la valeur du coefficient d'intercorrélation globale GCC délivrée par la voie 2 de corrélation unique.

Le module $1_0$ d'exploration et de poursuite de canal délivre le signal de liste de trajets de propagation directs et secondaires LT précédemment décrite dans la description relativement à la mise en oeuvre du procédé objet de l'invention, ainsi qu'un signal de synchronisation $ST_1$ sur le temps symbole au générateur de motifs élémentaires de synchronisation $1_{11}$ constitutif de la voie d'acquisition et d'actualisation $1_1$.

Dans ces conditions, le générateur de motifs élémentaires de synchronisation $1_{11}$ délivre, après acquisition de l'image du canal par corrélation glissante, un ensemble de motifs de synchronisation élémentaires $SEM_1$ formant un motif de corrélation d'acquisition, lequel correspond sensiblement à l'existence d'un motif de corrélation élémentaire engendré à l'instant d'existence prévisible de chaque impulsion directe ou d'impulsions secondaires associées à celle-ci, en l'absence de variabilité significative du canal de transmission.

Pour une description plus détaillée d'un processus d'acquisition et de poursuite par corrélation glissante, on pourra utilement se reporter à l'article intitulé "Rapid Acquisition for Ultra-Wideband Localizers" publié par Robert Fleming, Cherie Kushner, Gary Roberts, Uday Nandiwada, AEther Wire & Location, Inc. par exemple. L'article précité est disponible sur le site Internet http://www.aetherwire.com.

A titre d'exemple non limitatif, on indique que le signal de synchronisation $ST_1$ est, bien entendu, synchronisé sur le temps symbole.

Dans ce but, le module d'exploration et de poursuite de canal $1_0$ peut, à partir des codes pseudo-aléatoires de chacun des utilisateurs, et donc de la position des impulsions directes engendrée par chacun de ces derniers, pu s à partir de la liste des trajets LT, engendrer un signal de synchronisation $ST_1$, tel que décrit précédemment dans la description.

Dans une variante de réalisation, la sélection des instants de création des motifs élémentaires de synchronisation, peut être effectuée à partir des codes pseudo-aléatoires détenus par le générateur de motifs élémentaires de synchronisation $1_{11}$, le signal de synchronisation $ST_1$ se réduisant alors en une série d'impulsions successives équidistantes constituant une base de temps par exemple, les impulsions équidistantes étant séparées par un intervalle de temps correspondant à la résolution de discrimination de deux impulsions directes et/ou secondaires successives. Ces impulsions sont répétées à chaque temps symbole $T_5$.

Le mode opératoire précité permet d'actualiser le signal de liste de trajets LT par corrélation glissante pour le temps symbole suivant à partir de la valeur du coefficient de corrélation globale GCC délivré par la voie de corrélation unique pour le temps de symbole précédent en fonction de l'apparition et/ou de la disparition de trajets de propagation directs respectivement secondaires en fonction de la variabilité du canal de transmission.

On comprend, en particulier, que, en régime établi, c'est-à-dire en l'absence de variabilité du canal de transmission, le signal de liste de trajets LT est sensiblement invariant d'un temps symbole à un autre.

Au contraire, lors de la disparition ou de l'apparition d'une impulsion secondaire par exemple, le motif de corrélation d'acquisition délivré au corrélateur $1_{12}$ est modifié ainsi que, bien entendu, la valeur du coefficient de corrélation globale $GAC_1$ correspondante.

La comparaison des valeurs des coefficients de corrélation GCC et $GAC_1$ permet alors de retenir la modification du motif de corrélation d'acquisition et, bien entendu, d'actualiser le signal de liste de trajets LT pour le temps symbole suivant, afin de permettre, finalement, l'actualisation du processus de corrélation de la voie de corrélation unique 2.

Dans tous les cas, on comprend, après établissement du canal en une position d'équilibre, c'est-à-dire en l'absence de variabilité du canal, que le signal de liste de trajets LT délivré par le module d'exploration et de poursuite de canal est formé par les instants de corrélation composite avec la suite d'impulsions successives reçues, pour lequel la valeur du coefficient d'intercorrélation globale GCC délivrée par la voie de corrélation unique est maximale.

En ce qui concerne la voie de corrélation unique, on indique, ainsi que représenté en figure 4A, que celle-ci comprend, de manière semblable à celle de la voie de corrélation globale d'acquisition, un corrélateur $2_2$ recevant la suite d'impulsions successives reçues délivrées par les circuits de réception communs, un intégrateur ou sommateur $2_3$ permettant de calculer la valeur du coefficient de corrélation globale GCC à partir des valeurs de corrélation élémentaires délivrées par le corrélateur $2_2$ et un circuit de décision de symbole $2_4$ recevant la valeur du coefficient de corrélation globale GCC.

En outre, la voie de corrélation unique 2 comprend un circuit de pilotage de réception $2_0$ recevant le signal de liste de trajets LT précédemment décrit et un générateur de motifs élémentaires de corrélation $2_1$ recevant le signal délivré par le module de pilotage de réception $2_0$. Le générateur de motifs élémentaires de corrélation $2_1$ délivre le motif de corrélation composite $2_1$.

En ce qui concerne le module $2_0$ de pilotage de réception, on indique que ce dernier, à partir du signal de liste de trajets LT, permet de délivrer une série d'impulsions de déclenchement correspondant aux instants de corrélation définis précédemment dans la description. La suite d'impulsions ainsi obtenue permet d'obtenir le motif de corrélation composite, à partir de motifs de corrélation élémentaires engendrés pour chaque impulsion de déclenchement délivrée par le module de pilotage et de réception $2_0$.

Enfin, dans une variante de mise en oeuvre du dispositif objet de la présente invention, on indique que, ainsi que représenté en figure 4A, celui-ci peut comporter une pluralité de voies de corrélation globale d'acquisition et de poursuite, les voies $1_1$ précédemment décrite et $1_2$ représentée en pointillés. La ou les voies de corrélation globale d'acquisition et de poursuite sont identiques à la voie 1, précédemment décrite et, pour cette raison, présente des éléments de références semblables, $1_{22}$ pour le corrélateur, $1_{23}$ pour l'intégrateur ou sommateur, $1_{21}$ pour le générateur de motifs élémentaires de synchronisation, $SEM_2$ pour les motifs élémentaires de synchronisation.

Deux voies de corrélation globale d'acquisition et de poursuite ou plusieurs peuvent être prévues, le module d'exploration et de poursuite de canal $1_0$ étant commun à toutes les voies précitées.

Dans une telle situation, le module d'exploration et de poursuite de canal $1_0$ reçoit la valeur des coefficients de corrélation globale d'acquisition correspondants référencée $GAC_1$, $GAC_2$ sur la figure 4A, mais délivre, par cor tre, une pluralité de signaux de synchronisation $ST_1$, $ST_2$, ainsi que mentionné sur la figure précitée.

Ainsi, chaque voie de corrélation globale d'acquisition et de poursuite $1_1$ $1_2$ et de rang ultérieur comprend un générateur de motifs élémentaires de synchronisation $1_{11}$ et $1_{21}$ qui lui est propre. Chacune de ces dernières reçoit un signal de liste des instants de corrélation spécifique délivré par le module d'exploration et de poursuite de canal $1_0$, c'est-à-dire les signaux $ST_1$ et $ST_2$ et suivants. Ces signaux peuvent correspondre avantageusement à des tranches temporelles décalées, telles que les tranches de trame par exemple, ces tranches étant successives et complémentaires. Ceci permet d'engendrer une suite de motifs de corrélation élémentaires successifs de synchronisation par tranches temporelles successives complémentaires, par corrélation glissante, et de diviser, ainsi, le temps d'acquisition de l'image du canal de transmission par le nombre de voies de corrélation globale d'acquisition et de poursuite constitutives de la pluralité de voies de corrélation globale d'acquisition et de poursuite.

Le mode opératoire du système objet de l'invention, tel que représenté en figure 4A peut être alors illustré par la figure 4B de la manière ci-après.

A l'établissement de la liaison, une étape d'initialisation 100 est appelée, dans laquelle le système récepteur représenté en figure 4A est initialisé, en particulier, les valeurs de calcul sont toutes remises à zéro par exemple.

L'étape 100 est suivie, après initialisation terminée, d'une étape 101 de sondage du canal et de recherche de synchronisation par corrélation glissante, ainsi que mentionné précédemment dans la description. Cette étape est conduite, ainsi que décrit précédemment dans la description, à partir des codes pseudo-aléatoires utilisés à chacun des utilisateurs, et, bien entendu, de la position des impulsions reçues, émises et donc reçues, compte tenu du code pseudo-aléatoire précité. L'apparition d'un pic principal de corrélation permet de synchroniser le système récepteur objet de l'invention, tel que représenté en figure 4A sur l'émetteur, en détectant et marquant le trajet principal, suite à détection de la position de chaque impulsion principale. Dans cette situation, les pics de corrélation secondaires, révélant l'existence de trajets de propagation secondaires, sont alors détectés et la valeur du coefficient de corrélation globale GCC et du coefficient de corrélation globale d'acquisition GAC sont alors actualisées en conséquence.

Le module d'exploration et de poursuite de canal $1_0$ permet alors d'ic entifier les trajets à traiter, de leur attribuer, éventuellement, un coefficient de pondération, de la même manière que dans le cas des dispositifs de l'art antérieur, et de noter le temps de propagation respectif, ainsi que mentionné précédemment dans la description pour les impulsions successives.

On rappelle que, conformément à un mode de mise en oeuvre spécifique du procédé et du système objets de la présente invention, la sélection des trajets peut être effectuée soit en retenant les N plus forts trajets ou les N premiers trajets ou, le cas échéant, un compromis entre les deux.

Après exécution de la synchronisation, la synchronisation étant acquise, l'étape 101 est suivie d'une étape 102 de réception mono-trajet au cours de laquelle la sélection des trajets peut être effectuée.

A titre d'exemple non limitatif, un processus de sélection particulièrement avantageux peut consister à traiter le premier trajet arrivé, puis ajouter les trajets suivants un par un jusqu'à ce que la prise en compte de trajets supplémentaires n'augmente plus le rapport signal à bruit global.

Lorsque, après exécution de l'étape 102, la réception mono-trajet est acquise, c'est-à-dire réception des trajets principaux, et que la sélection des trajets de propagation des impulsions secondaires est également établie, la sélection précitée est alors exploitable.

Dans cette situation, l'un des corrélateurs, le corrélateur $2_2$ de la figure 4A, fonctionne donc en réception, alors que le corrélateur $1_{12}$ de la voie de corrélation d'acquisition et de poursuite $1_1$ opère par corrélation glissante afin de maintenir à jour l'image du canal de transmission. Cette opération est réa isée à l'étape 103 de la figure 4B, la réception étant alors effectuée en multi-trajet.

On comprend, en particulier, que le module d'exploration et de poursuite de canal permet de détecter l'apparition ou la disparition de trajets de propagation, ainsi que de poursuivre les trajets précités. La poursuite des trajets peut être effectuée selon le critère d'énergie ou de rapport signal à bruit mentionné précédemment dans la description.

On comprend, ainsi, que le module d'exploration et de poursuite de canal $1_0$ permet ainsi d'assurer un traitement dynamique des trajets, d'attribuer et de modifier les coefficients de pondération lorsque ces derniers sont utilisés et de changer la liste des trajets traités, le signal de liste de trajets LT étant air si modifié pour réactualisation.

On comprend, dans ces conditions, que le processus de poursuite ainsi engagé relatif à l'actualisation de l'image du canal de transmission permet de conserver des objectifs ce qualité de la liaison.

L'opération 103 est suivie d'une opération 104 en réception multi-trajet consistant en la mise à jour de la sélection des trajets, c'est-à-dire de la liste des trajets LT. La flèche de retour de l'étape 104 à l'étape 103, sur la figure 4B, illustre le caractère continu de la réception multi-trajet et, bien entendu, de la scrutation de canal et de mise à jour de la liste des trajets LT.

Enfin, lors de la terminaison de la communication, un retour à l'étape d'initialisation est reconduit si nécessaire.

En référence à la figure 4B, on indique que, dans le cas d'un canal de transmission évoluant rapidement, c'est-à-dire canal à variabilité importante, le processus de poursuite du canal de transmission peut être largement accéléré en utilisant plusieurs voies de corrélation globale d'acquisition $1_1$, $1_2$ ou autre.

Dans l'exemple de l'utilisation d'une modulation 2-PPM pour la transmission des impulsions UWB et d'une répétition de trois trames par symbole, il peut être envisagé d'utiliser une voie de corrélation globale d'acquisition et de poursuite par trame et par temps de trame par exemple.

Enfin, lorsqu'une pondération de l'importance de chacun des trajets retenus sélectionnés par le module d'exploration et de poursuite $1_0$ est retenue, cette opération de pondération peut être mise en oeuvre au niveau du générateur de motifs élémentaires de corrélation $2_1$ de la voie de corrélation globale unique 2, à chaque motif élémentaire pouvant alors être appliquée, au niveau du générateur $2_1$ précité, une amplitude proportionnelle au coefficient de pondération du trajet associé. Dans cette situation, un dispositif de contrôle de l'amplitude du motif, représenté en $2_{1a}$ au dessin, peut être ajouté si nécessaire.

On a ainsi décrit un procédé et un système de réception d'un signal ultra-large bande représentatif de symboles particulièrement performant dans la mesure où le nombre de voies de corrélation peut être sensiblement réduit à deux, une voie de corrélation unique assurant la réception proprement dite et une voie de corrélation globale d'acquisition, ainsi que décrit précédemment. En outre, le procédé et le système objets de l'invention apparaissent particulièrement avantageux dans la mesure où le nombre de trajets traités est adaptatif, le caractère adaptatif résultant de la possibilité de choisir et adapter le nombre de trajets de réception traités en cours de fonctionnement.

Ainsi, un récepteur conforme à l'objet de la présente invention est en mesure de modifier ses caractéristiques dynamiquement et donc de s'adapter de façon idéale aux conditions de fonctionnement dictées par les qualités des paramètres, tels que qualité de liaison, contraintes d'autonomie et variabilité du canal de transmission. Enfin, le nombre de trajets traités n'est pas limité par des contingences d'exécution matérielle mais, au contraire, par des critères de valeur de rapport signal à bruit ou énergétiques spécifiques par exemple.

**Revendications**

1. Procédé de réception d'un signal ultra-large bande représentatif de symboles, ce signal transmis sur un canal de transmission comportant, sur un temps symbole, une suite d'impulsions directes successives modulées pour le même symbole chaque impulsion directe se propageant selon un trajet de propagation direct à laquelle est associée une pluralité d'impulsions secondaires successives distinctes se propageant chacune suivant un trajet de propagation secondaire, **caractérisé en ce que**, la suite d'impulsions directes successives modulées et ladite pluralité d'impulsions secondaires associée à chacune desdites impulsions directes successives modulées étant reçues sur un même circuit de réception, celui-ci consiste:

- à engendrer un motif de corrélation composite constitué par une suite de motifs de corrélation élémentaires, ladite suite de motifs de corrélation élémentaires comprenant :

+ pour chaque impulsion directe, un premier motif de corrélation élémentaire associé à cette impulsion directe, et
+ pour chaque impulsion directe, des motifs de corrélation élémentaires successifs, associés chacun à une impulsion secondaire successive de l'impulsion directe, lesdits motifs de corrélation élémentaires successifs étant décalés en temps par rapport audit premier motif de corrélation élémentaire de la différence de temps de propagation entre le temps de propagation de l'impulsion directe sur le trajet de propagation direct et le temps de propagation de l'impulsion secondaire associée se propageant sur le trajet de propagation secondaire correspondant ;

- à fournir le signal ultra-large bande et le motif de corrélation composite à un corrélateur, afin de calculer un coefficient d'intercorrélation élémentaire entre chaque motif d'intercorrélation élémentaire et l'impulsion directe respectivement l'impulsion secondaire associée à ce motif d'intercorrélation élémentaire;
- à intégrer sur le temps symbole l'ensemble des valeurs de coefficient d'intercorrélation élémentaire pour délivrer une valeur de coefficient d'intercorrélation globale, représentative d'une valeur de corrélation globale du symbole.

2. Procédé selon l'une des revendications 1, **caractérisé en ce que**, pour un ensemble dénombrable d'impulsions, impulsion directe et impulsions secondaires, se propageant sur un trajet direct respectivement sur un trajet secondaire d'une pluralité de trajets de propagation secondaires, ledit procédé consiste à retenir les N premiers trajets, lesdits N premiers trajets comportant ledit trajet direct, correspondant à un temps de propagation de l'impulsion modulée associée le plus faible, et N-1 trajets secondaires correspondant chacun à un temps de propagation d'une impulsion secondaire successivement croissant.

**3.** Procédé selon l'une des revendications 1 ou 2, **caractérisé en ce que**, pour un ensemble dénombrable d'impulsions, impulsion directe et impulsions secondaires, se propageant sur un trajet direct respectivement sur un trajet secondaire d'une pluralité de trajets de propagation secondaires, ledit procédé consiste à retenir N trajets pour lesquels l'amplitude de l'impulsion directe respectivement des impulsions secondaires est maximale.

**4.** Procédé selon l'une des revendications 2 ou 3, **caractérisé en ce que** le nombre N de trajets retenus est adapté soit selon un critère de sélection des N premiers trajets, soit selon un critère de sélection des N trajets correspondant à une amplitude maximale de l'impulsion directe respectivement des impulsions secondaires en fonction des conditions de propagation, ce qui permet d'optimiser la qualité de la liaison par signal à ultra-large bande.

**5.** Procédé selon l'une des revendications 1 à 4, **caractérisé en ce que** l'étape consistant à engendrer un motif de corrélation composite consiste :

- à établir par corrélation, sur au moins un temps symbole, une image dudit canal de transmission, en termes d'impulsion directe respectivement d'impulsions secondaires, de temps de propagation et de difference de temps de propagation entre impulsion directe et impulsions secondaires successives;
- à mettre à jour, par corrélation glissante, l'image dudit canal de transmission pour actualiser l'apparition et la disparition de trajets de propagation secondaires et/ou du trajet de propagation direct et établir sur au moins un temps symbole, ledit motif de corrélation composite, comme image actualisée dudit canal de transmission.

**6.** Système de réception d'un signal ultra-large bande représentatif de symboles, ce signal transmis sur un canal de transmission comportant, sur un temps symbole, une suite d'impulsions directes successives modulées pour le même symbole, chaque impulsion directe modulée se propageant selon un trajet de propagation direct à laquelle est associée une pluralité d'impulsions secondaires successives distinctes se propageant chacune suivant un trajet de propagation secondaire, **caractérisé en ce qu'**il comporte au moins :

- des moyens de réception communs de ladite suite d'impulsions successives modulées et de ladite pluralité d'impulsions secondaires associées à chacune desdites impulsions directes successives modulées, et connectés auxdits moyens de réception communs,

- une voie d'acquisition et d'actualisation, sur au moins un temps symbole, d'une image du canal de transmission, en termes d'impulsion directe respectivement d'impulsions secondaires, de temps de propagation et de difference de temps de propagation entre impulsion directe et impulsions secondaires successives, ladite voie d'acquisition et d'actualisation permettant, par corrélation glissante, d'assurer une actualisation de l'apparition et de la disparition de trajets de propagation secondaires et/ou du trajet de propagation principal,

+ pour chaque impulsion directe, un premier motif de corrélation élémentaire associé à cette impulsion directe, et
+ pour chaque impulsion directe, des motifs de corrélation élémentaires successifs, associés chacun à une impulsion secondaire successive de l'impulsion directe, lesdits motifs de corrélation élémentaire successifs étant décalés en temps par rapport audit premier motif de corrélation élémentaire de la différence de temps de propagation entre le temps de propagation de l'impulsion directe sur le trajet de propagation direct et le temps de propagation de l'impulsion secondaire associée se propageant sur le trajet de propagation secondaire correspondant :

- une voie de corrélation recevant ledit signal de liste de trajets de propagation directs respectivement secondaires, la voie de corrélation étant apte à établir, sur au moins un temps symbole, un motif de corrélation composite constitué par une suite de motifs de corrélation élémentaires, la voie de corrélation comprenant un unique corrélateur recevant le signal ultra-large bande et le motif de corrélation composite afin de calculer un coefficient d'intercorrélation élémentaire entre chaque motif d'intercorrélation élémentaire et l'impulsion directe respectivement l'impulsion secondaire associée à ce motif d'intercorrélation élémentaire, et la voie de corrélation comprenant un sommateur pour intégrer sur le temps symbole l'ensemble des valeurs de coefficient d'intercorrélation élémentaire pour délivrer une valeur de coefficient d'intercorrélation globale, représentative d'une valeur de corrélation globale du symbole.

**7.** Système selon la revendication 6, **caractérisé en ce que** ladite voie d'acquisition et d'actualisation comporte :

- au moins une voie de corrélation globale d'acquisition et de poursuite recevant ladite suite d'impulsions successives reçue délivrée par lesdits moyens de réception communs et délivrant une valeur de coefficient de corrélation globale d'acquisition :

- un module d'exploration et de poursuite du canal recevant au moins la valeur de coefficient de corrélation globale d'acquisition et la valeur de coefficient de corrélation global et délivrant, d'une part, ledit signal de liste de trajets de propagation directs et secondaires, et, d'autre part, un signal de synchronisation à ladite voie de corrélation globale d'acquisition et de poursuite.

8. Système selon la revendication 7, **caractérisé en ce que** ladite voie de corrélation globale d'acquisition et de poursuite comprend :

- un corrélateur recevant ladite suite d'impulsions successives reçue et un sommateur délivrant ladite valeur de coefficient de corrélation d'acquisition ;
- un générateur de motifs élémentaires de synchronisation recevant ledit signal de synchronisation et délivrant un motif de corrélation d'acquisition audit: corrélateur, ledit signal de synchronisation consistant en une suite d'instants de motifs de corrélation élémentaires successifs, ce qui permet d'actualiser ledit signal de liste de trajets par corrélation glissante pour le temps symbole suivant par corrélation glissante à partir de la valeur du coefficient de corrélation globale délivrée par ladite voie de corrélation unique pour le temps symbole précédent, en fonction de l'apparition respectivement la disparition de trajets de propagation directs respectivement secondaires, en fonction de la variabilité dudit canal de transmission.

9. Système selon l'une des revendications 6 à 8, **caractérisé en ce que** ledit signal de liste de trajets délivré par ledit module d'exploitation et de poursuite de canal est formé par les instants de corrélation composite avec ladite suite d'impulsions successives reçue pour lequel la valeur du coefficient d'intercorrélation globale délivrée par ladite voie de corrélation unique est maximale.

10. Système selon l'une des revendications 7 à 9, **caractérisé en ce que** celui-ci comporte une pluralité de voies de corrélation globale d'acquisition et de poursuite recevant ladite suite d'impulsions successives reçue, chaque voie de corrélation globale d'acquisition et de poursuite étant associée à un gér érateur de motifs élémentaires de synchronisation, l'ensemble formé par une voie de corrélation globale d'acquisition et de poursuite et par le générateur de motif élémentaire associé à celle-ci recevant un signal de liste des instants de corrélation spécifiques délivré par ledit module d'exploration et de poursuite de canal, lesdits signaux de liste des instants de corrélation spécifiques correspondant à des tranches temporelles décalées, ce qui permet d'engendrer une suite de motifs de corrélation élémentaire successifs par tranches temporelles successives complémentaires par corrélation glissante et de diviser sensiblement le temps d'acquisition de l'image du canal de transmission par le nombre de voies de corrélation globale d'acquisition et de poursuite constitutives de ladite pluralité de voies de corrélation globale d'acquisition et de poursuite.

11. Système selon l'une des revendications 6 à 10, **caractérisé en ce que** ladite voie de corrélation unique comporte au moins :

- un générateur de motifs élémentaires de corrélation et,
- associé à ce générateur un module de pondération de l'un au moins des motifs de corrélation élémentaire constitutifs du motif de corrélation composite.

## Claims

1. Method for receiving an ultra-wideband signal representative of symbols, this signal transmitted on a transmission channel comprising, over a symbol time, a series of modulated successive direct pulses for the same symbol, each direct pulse propagating along a direct propagation path with which a plurality of distinct successive secondary pulses is associated each propagating along a secondary propagation path, **characterized in that**, the series of modulated successive direct pulses and the said plurality of secondary pulses associated with each of the said modulated successive direct pulses being received on one and the same reception circuit, the latter consists:

- in generating a composite correlation pattern made up of a series of elementary correlation patterns, the said series of elementary correlation patterns comprising:

+ for each direct pulse, a first elementary correlation pattern associated with this direct pulse, and
+ for each direct pulse, successive elementary correlation patterns, each associated with a successive secondary pulse of the direct pulse, the said successive elementary correlation patterns being shifted in time with respect to the said first elementary correlation pattern by the difference in propagation time between the propagation time of the direct pulse on the direct propagation path and the propagation time of the associated secondary pulse propagating on the corresponding secondary propagation path;

- in providing the ultra-wideband signal and the composite correlation pattern to a correlator, so as to calculate an elementary intercorrelation coefficient between each elementary intercorrelation pattern and the direct pulse respectively the secondary pulse associated with this elementary intercorrelation pattern;

- in integrating over the symbol time the set of values of elementary intercorrelation coefficient so as to deliver a global intercorrelation coefficient value representative of a global correlation value for the symbol.

2. Method according to Claim 1, **characterized in that**, for a countable set of pulses, direct pulse and secondary pulses, propagating on a direct path respectively on a secondary path of a plurality of secondary propagation paths, the said method consists in retaining the first N paths, the said first N paths comprising the said direct path, corresponding to the lowest propagation time of the associated modulated pulse, and N-1 secondary paths each corresponding to a successively increasing propagation time of a secondary pulse.

3. Method according to one of Claims 1 or 2, **characterized in that**, for a countable set of pulses, direct pulse and secondary pulses, propagating on a direct path respectively on a secondary path of a plurality of secondary propagation paths, the said method consists in retaining N paths for which the amplitude of the direct pulse respectively of the secondary pulses is a maximum.

4. Method according to one of Claims 2 or 3, **characterized in that** the number N of paths retained is adapted either according to a criterion for selecting the first N paths, or according to a criterion for selecting the N paths corresponding to a maximum amplitude of the direct pulse respectively of the secondary pulses as a function of the propagation conditions, thereby making it possible to optimize the quality of the link by ultra-wideband signal.

5. Method according to one of Claims 1 to 4, **characterized in that** the step consisting in generating a composite correlation pattern consists:

- in establishing by correlation, over at least one symbol time, an image of the said transmission channel, in terms of direct pulse respectively of secondary pulses, of propagation time and of difference in propagation time between direct pulse and successive secondary pulses;

- in updating, by sliding correlation, the image of the said transmission channel so as to update the appearance and the disappearance of secondary propagation paths and/or of the direct propagation path and establish over at least one symbol time, the said composite correlation pattern, as updated image of the said transmission channel.

6. System for receiving an ultra-wideband signal representative of symbols, this signal transmitted on a transmission channel comprising, over a symbol time, a series of modulated successive direct pulses for the same symbol, each modulated direct pulse propagating along a direct propagation path with which a plurality of distinct successive secondary pulses is associated each propagating along a secondary propagation path, **characterized in that** it comprises at least:

- common means for receiving the said series of modulated successive pulses and the said plurality of secondary pulses associated with each of the said modulated successive direct pulses,

- a pathway for the acquisition and updating, over at least one symbol time, of an image of the transmission channel, in terms of direct pulse respectively of secondary pulses, of propagation time and of difference in propagation time between direct pulse and successive secondary pulses, the said acquisition and updating pathway making it possible, by sliding correlation, to ensure updating of the appearance and of the disappearance of secondary propagation paths and/or of the main propagation path,

+ for each direct pulse, a first elementary correlation pattern associated with this direct pulse, and
+ for each direct pulse, successive elementary correlation patterns, each associated with a successive secondary pulse of the direct pulse, the said successive elementary correlation patterns being shifted in time with respect to the said first elementary correlation pattern by the difference in propagation time between the propagation time of the direct pulse on the direct propagation path and the propagation time of the associated secondary pulse propagating on the corresponding secondary propagation path;

- a correlation pathway receiving the said list signal of direct respectively secondary propagation paths, the correlation pathway being able to establish, over at least one symbol time, a composite correlation pattern made up of a series of elementary correlation patterns, the correlation pathway comprising a unique correlator receiving the ultra-wideband signal and the composite correlation pattern so as to calculate an elementary intercorrelation coefficient between each elementary intercorrelation pattern and the direct pulse respectively the secondary pulse associated with this elementary intercorrelation pattern, and the correlation pathway comprising a summator for integrating over the symbol time the set of values of elementary intercorrelation coefficient so as to deliver a global intercorrelation coefficient value representative of a global correlation value for the symbol.

7. System according to Claim 6, **characterized in that** the said acquisition and updating pathway comprises:

- at least one acquisition and tracking global correlation pathway receiving the said series of successive pulses received delivered by the said common receiving means and delivering a value of acquisition global correlation coefficient;
- a channel exploration and tracking module receiving at least the value of acquisition global correlation coefficient and the value of global correlation coefficient and delivering, on the one hand, the said list signal of direct and secondary propagation paths, and, on the other hand, a synchronization signal to the said acquisition and tracking global correlation pathway.

8. System according to Claim 7, **characterized in that** the said acquisition and tracking global correlation pathway comprises:

- a correlator receiving the said series of successive pulses received and a summator delivering the said value of acquisition correlation coefficient;
- a generator of elementary synchronization patterns receiving the said synchronization signal and delivering an acquisition correlation pattern to the said correlator, the said synchronization signal consisting of a series of instants of successive elementary correlation patterns, thereby making it possible to update the said list signal of paths by sliding correlation for the following symbol time by sliding correlation on the basis of the value of the global correlation coefficient delivered by the said unique correlation pathway for the previous symbol time, as a function of the appearance respectively the disappearance of direct respectively secondary propagation paths, as a function of the variability of the said transmission channel.

9. System according to one of Claims 6 to 8, **characterized in that** the said path list signal delivered by the said channel exploration and tracking module is formed by the instants of composite correlation with the said series of successive pulses received for which the global intercorrelation coefficient value delivered by the said unique correlation pathway is a maximum.

10. System according to one of Claims 7 to 9, **characterized in that** it comprises a plurality of acquisition and tracking global correlation pathways receiving the said series of successive pulses received, each acquisition and tracking global correlation pathway being associated with a generator of elementary synchronization patterns, the set formed by an acquisition and tracking global correlation pathway and by the elementary pattern generator associated therewith receiving a list signal of the specific instants of correlation which is delivered by the said channel exploration and tracking module, the said list signals of the specific instants of correlation corresponding to shifted time slices, thereby making it possible to generate a series of successive elementary correlation patterns by complementary successive time slices by sliding correlation and to substantially divide the acquisition time for the image of the transmission channel by the number of acquisition and tracking global correlation pathways making up the said plurality of acquisition and tracking global correlation pathways.

11. System according to one of Claims 6 to 10, **characterized in that** the said unique correlation pathway comprises at least:

- a generator of elementary correlation patterns and,
- associated with this generator a module for weighting at least one of the elementary correlation patterns making up the composite correlation pattern.

**Patentansprüche**

1. Verfahren zum Empfang eines für Symbole repräsentativen Ultrabreitbandsignals, wobei dieses auf einem Übertragungskanal übertragene Signal über eine Symbolzeit eine Folge von modulierten aufeinanderfolgenden direkten Impulsen für das gleiche Symbol, wobei jeder direkte Impuls sich gemäß einem direkten Ausbreitungsweg ausbreitet, aufweist, der mehrere unterschiedliche aufeinanderfolgende sekundäre Impulse zugeordnet sind, die sich je gemäß einem sekundären Ausbreitungsweg ausbreiten, **dadurch gekennzeichnet, dass**, da die Folge von modulierten aufeinanderfolgenden direkten Impulsen und die jedem der modulierten aufeinanderfolgenden direkten Impulse zugeordneten mehreren sekundären Impulse in der gleichen Empfangsschaltung empfangen werden, die darin besteht:

- ein zusammengesetztes Korrelationsmuster zu erzeugen, das aus einer Folge von elementaren Korrelationsmustern besteht, wobei die Folge von elementaren Korrelationsmustern aufweist:

+ für jeden direkten Impuls ein erstes elementares Korrelationsmuster, das diesem direkten Impuls zugeordnet ist, und
+ für jeden direkten Impuls aufeinanderfolgende elementare Korrelationsmuster, die je einem aufeinanderfolgenden sekundären Impuls des direkten Impulses zugeordnet sind, wobei die aufeinanderfolgenden elementaren Korrelationsmuster zeitlich bezüglich des ersten elementaren Korrelationsmusters um die Ausbreitungszeitdifferenz zwischen der Ausbreitungszeit des direkten Impulses auf dem direkten Ausbreitungsweg und der Ausbreitungszeit des zugeordneten sekundären Impulses verschoben sind, der sich auf dem entsprechenden sekundären Ausbreitungsweg ausbreitet;

- das Ultrabreitbandsignal und das zusammengesetzte Korrelationsmuster an einen Korrelator zu liefern, um einen elementaren Interkorrelationskoeffizient zwischen jedem elementaren Interkorrelationsmuster und dem diesem elementaren Interkorrelationsmuster zugeordneten direkten Impuls bzw. sekundären Impuls zu berechnen;
- über die Symbolzeit die Gesamtheit der elementaren Interkorrelationskoeffizientenwerte zu integrieren, um einen globalen Interkorrelationskoeffizientenwert zu liefern, der für einen globalen Korrelationswert des Symbols repräsentativ ist.

2. Verfahren nach Anspruch 1, **dadurch gekennzeichnet, dass** für eine zählbare Einheit von Impulsen, einem direkten Impuls und sekundären Impulsen, die sich auf einem direkten Weg bzw. auf einem sekundären Weg mehrerer sekundärer Ausbreitungswege ausbreiten, das Verfahren darin besteht, die N ersten Wege zu wählen, wobei die N ersten Wege den direkten Weg, der einer geringsten Ausbreitungszeit des zugeordneten modulierten Impulses entspricht, und N-1 sekundäre Wege aufweisen, die je einer Ausbreitungszeit eines sekundären Impulses entsprechen, die nacheinander zunimmt.

3. Verfahren nach einem der Ansprüche 1 oder 2, **dadurch gekennzeichnet, dass** für eine zählbare Einheit von Impulsen, einem direkten Impuls und sekundären Impulsen, die sich auf einem direkten Weg bzw. auf einem sekundären Weg mehrerer sekundärer Ausbreitungswege ausbreiten, das Verfahren darin besteht, N Wege zu wählen, für die die Amplitude des direkten Impulses bzw. der sekundären Impulse maximal ist.

4. Verfahren nach einem der Ansprüche 2 oder 3, **dadurch gekennzeichnet, dass** die Anzahl N von gewählten Wegen entweder gemäß einem Auswahlkriterium der N ersten Wege oder gemäß einem Auswahlkriterium der N Wege, die einer maximalen Amplitude des direkten Impulses bzw. der sekundären Impulse in Abhängigkeit von den Ausbreitungsbedingungen entsprechen, angepasst wird, was es ermöglicht, die Qualität der Verbindung durch Ultrabreitbandsignal zu optimieren.

5. Verfahren nach einem der Ansprüche 1 bis 4, **dadurch gekennzeichnet, dass** der Schritt, der darin besteht, ein zusammengesetztes Korrelationsmuster zu erzeugen, darin besteht:

- durch Korrelation über mindestens eine Symbolzeit ein Bild des Übertragungskanals im Hinblick auf einen direkten Impuls bzw. sekundäre Impulse, die Ausbreitungszeit und die Ausbreitungszeitdifferenz zwischen direktem Impuls und aufeinanderfolgenden sekundären Impulsen festzulegen;
- durch gleitende Korrelation das Bild des Übertragungskanals auf den neuesten Stand zu bringen, um das Auftreten und das Verschwinden von sekundären Ausbreitungswegen und/oder des direkten Ausbreitungswegs zu aktualisieren und über mindestens eine Symbolzeit das zusammengesetzte Korrelationsmuster als das aktualisierte Bild des Übertragungskanals festzulegen.

6. System zum Empfang eines für Symbole repräsentativen Ultrabreitbandsignals, wobei dieses auf einem Übertragungskanal übertragene Signal über eine Symbolzeit eine Folge von modulierten aufeinanderfolgenden direkten Impulsen für das gleiche Symbol, wobei jeder direkte Impuls sich gemäß einem direkten Ausbreitungsweg ausbreitet, aufweist, der mehrere unterschiedliche aufeinanderfolgende sekundäre Impulse zugeordnet sind, die sich je gemäß einem sekundären Ausbreitungsweg ausbreiten, **dadurch gekennzeichnet, dass** es mindestens aufweist:

- gemeinsame Empfangsmittel der Folge von modulierten aufeinanderfolgenden Impulsen und der mehreren sekundären Impulse, die jedem der modulierten aufeinanderfolgenden direkten Impulse zugeordnet sind, und mit den gemeinsamen Empfangsmitteln verbunden sind,
- einen Pfad der Erfassung und Aktualisierung über mindestens eine Symbolzeit eines Bilds des Übertragungskanals im Hinblick auf den direkten Impuls bzw. die sekundären Impulse, die Ausbreitungszeit und die Ausbreitungszeitdifferenz zwischen direktem Impuls und aufeinanderfolgenden sekundären Impulsen, wobei der Erfassungs- und Aktualisierungspfad es durch gleitende Korrelation ermöglicht, eine Aktualisierung des Auftretens und des Verschwindens von sekundären Ausbreitungswegen und/oder des Hauptausbreitungswegs zu gewährleisten,

+ für jeden direkten Impuls ein erstes elementares Korrelationsmuster, das diesem direkten Impuls zugeordnet ist, und
+ für jeden direkten Impuls aufeinanderfolgende elementare Korrelationsmuster, die je einem der aufeinanderfolgenden sekundären Impulse des direkten Impulses zugeordnet sind, wobei die aufeinanderfolgenden elementaren Korrelationsmuster zeitlich bezüglich des ersten elementaren Korrelationsmusters um die Ausbreitungszeitdifferenz zwischen der Ausbreitungszeit des direkten Impulses auf dem direkten Ausbreitungsweg und der Ausbreitungszeit des zugeordneten sekundären Impulses verschoben sind, der sich auf dem entsprechenden sekundären Ausbreitungsweg ausbreitet;

- einen Korrelationspfad, der das Listensignal von direkten bzw. sekundären Ausbreitungswegen empfängt, wobei der Korrelationspfad fähig ist, über mindestens eine Symbolzeit ein zusammengesetztes Korrelationsmuster festzulegen, das aus einer Folge von elementaren Korrelationsmustern besteht, wobei der Korrelationspfad einen einzigen Korrelator aufweist, der das Ultrabreitbandsignal und das zusammengesetzte Korrelationsmuster empfängt, um einen elementaren Interkorrelationskoeffizient zwischen jedem elementaren Interkorrelationsmuster und dem diesem elementaren Interkorrelationsmuster zugeordneten direkten Impuls bzw. sekundären Impuls zu berechnen, und der Korrelationspfad einen Summierer aufweist, um über die Symbolzeit die Gesamtheit der elementaren Interkorrelationskoeffizientenwerte zu integrieren, um einen globalen Interkorrelationskoeffizientenwert zu liefern, der für einen globalen Korrelationswert des Symbols repräsentativ ist.

7. System nach Anspruch 6, **dadurch gekennzeichnet, dass** der Erfassungs- und Aktualisierungspfad aufweist:

- mindestens einen globalen Erfassungs- und Verfolgungs-Korrelationspfad, der die empfangene Folge von aufeinanderfolgenden Impulsen empfängt, die von den gemeinsamen Empfangsmitteln geliefert wird, und einen globalen Erfassungs-Korrelationskoeffizientenwert liefert;
- ein Abtast- und Verfolgungsmodul des Kanals, das mindestens den globalen Erfassungs-Korrelationskoeffizientenwert und den globalen Korrelationskoeffizientenwert empfängt und einerseits das Listensignal von direkten und sekundären Ausbreitungswegen und andererseits ein Synchronisationssignal an den globalen Erfassungs- und Verfolgungs-Korrelationspfad liefert.

8. System nach Anspruch 7, **dadurch gekennzeichnet, dass** der globale Erfassungs- und Verfolgungs-Korrelationspfad aufweist:

- einen Korrelator, der die empfangene Folge von aufeinanderfolgenden Impulsen empfängt, und einen Summierer, der den Erfassungs-Korrelationskoeffizientenwert liefert;
- einen Generator von elementaren Synchronisationsmustern, der das Synchronisationssignal empfängt und ein Erfassungs-Korrelationsmuster an den Korrelator liefert, wobei das Synchronisationssignal aus einer Folge von Momenten von aufeinanderfolgenden elementaren Korrelationsmustern besteht, was es ermöglicht, das Wege-Listensignal durch gleitende Korrelation für die folgende Symbolzeit durch gleitende Korrelation ausgehend von dem globalen Wert des Korrelationskoeffizienten zu aktualisieren, der vom einzigen Korrelationspfad für die vorhergehende Symbolzeit geliefert wird, in Abhängigkeit vom Auftreten bzw. Verschwinden von direkten bzw. sekundären Ausbreitungswegen, in Abhängigkeit von der Variabilität des Übertragungskanals.

9. System nach einem der Ansprüche 6 bis 8, **dadurch gekennzeichnet, dass** das Wege-Listensignal, das vom Kanal-Abtast- und Verfolgungsmodul geliefert wird, von den Momenten der zusammengesetzten Korrelation mit der empfangenen Folge von aufeinanderfolgenden Impulsen geformt wird, für die der vom einzigen Korrelationspfad gelieferte Wert des globalen Interkorrelationskoeffizienten maximal ist.

10. System nach einem der Ansprüche 7 bis 9, **dadurch gekennzeichnet, dass** es mehrere Pfade der globalen Erfassungs- und Verfolgungskorrelation aufweist, die die empfangene Folge von aufeinanderfolgenden Impulsen empfangen, wobei jeder Pfad der globalen Erfassungs- und Verfolgungskorrelation einem Generator von elementaren Synchronisationsmustern zugeordnet ist, wobei die von einem Pfad der globalen Erfassungs- und Verfolgungskorrelation und von dem diesem zugeordneten Generator eines elementaren Musters gebildete Einheit ein Listensignal der spezifischen Korrelationsmomente empfängt, das vom Kanal-Abtast- und Verfolgungsmodul geliefert wird, wobei die Listensignale der spezifischen Korrelationsmomente verschobenen Zeitabschnitten entsprechen, was es ermöglicht, eine Folge von aufeinanderfolgenden elementaren Korrelationsmustern in komplementären aufeinanderfolgenden Zeitabschnitten durch gleitende Korrelation zu erzeugen und im Wesentlichen die Erfassungszeit des Bilds des Übertragungskanals durch die Anzahl von Pfaden globaler Erfassungs- und Verfolgungskorrelation zu dividieren, die die mehreren Pfade der globalen Erfassungs- und Verfolgungskorrelation bilden.

11. System nach einem der Ansprüche 6 bis 10, **dadurch gekennzeichnet, dass** der einzige Korrelationspfad mindestens aufweist:

  - einen Generator von elementaren Korrelationsmustern, und
  - diesem Generator zugeordnet ein Gewichtungsmodul mindestens eines der elementaren Korrelationsmuster, die das zusammengesetzte Korrelationsmuster bilden.

Logique de contrôle

1er branche de réception → $\alpha_1$

J-ème branche de réception → $\alpha_j$ → Combineur ⟶ Démodulateur

N-ème branche de réception → $\alpha_m$

RS

**FIG.1A** *(art antérieur)*

RS ⟶ Corrélateur ⟶ $\Sigma$ ⟶ Taux de corrélation sur le symbole

Générateur de motif ⟵ Synchro impulsion

**FIG.1B** *(art antérieur)*

**FIG.1C**
(art antérieur)

transmission d'un 1

transmission d'un 0

Signal reçu

δ

Gabarit

δ

Utilisateur 1:code pseudo 1,3,7

Utilisateur 2:code pseudo 5,4,1

FIG.1D (art antérieur)

$ID_{ij}$
transmission

Réception
$\{ID_{ijk}\}_{k=0}^{k=N}$ ————— A

Calcul du motif de
corrélation composite ————— B
$\{MCC_{ijk}\}_{k=0}^{k=N}$

$ICG = \sum_{k=1}^{Ns} ID_{ijk} \cdot MCC_{ijk}$ ————— C

calcul de la valeur du coefficient d'intercorrélation globale

*FIG.2*

*FIG.3A*

*FIG.3B*

*FIG.3C*

*FIG.3D*

FIG.4A

EP 1 573 933 B1

100

```
┌─────────────┐
│  ┌──────┐   │
│  │      │   │────── Initialisation
│  └──────┘   │
└─────────────┘
```

─── Initialisation terminée

101

┌──────┐
│      │────── Sondage du canal et recherche de synchronisation par corrélation glissante
└──────┘

─── Synchronisation acquise

102

┌──────┐
│      │────── Réception mono-trajet  |  Sélection des trajets
└──────┘

─── Sélection exploitable

103

┌──────┐
│      │────── Réception multi-trajet  |  Scrutation canal et qualité de liaison
└──────┘

─── Détection d'évolution du canal ou dégradation de la liaison

┌──────┐
│      │────── Réception multi-trajet  |  Mise à jour de la sélection
└──────┘
   104

─── Fin de la communication

## FIG.4B

**RÉFÉRENCES CITÉES DANS LA DESCRIPTION**

**Documents brevets cités dans la description**

- WO 0176086 A